# EUROPEAN PATENT SPECIFICATION

(11) **EP 2 451 238 B1**
(45) Date of publication and mention of the grant of the patent: **07.01.2015**
(21) Application number: 10360039.1
(22) Date of filing: 05.11.2010
(51) Int. Cl.: H04W 74/08, H04W 28/06, H04W 28/18, H04W 88/02

(54) **Control message encoding**
Steuernachrichtkodierung
Codage de message de contrôle

(43) Date of publication of application: 09.05.2012
(73) Proprietor: ALCATEL LUCENT, 92100 Boulogne-Billancourt (FR)
(72) Inventor: Wong, Shin Horng, Chippenham Wiltshire SN14 0SP (GB); Puddle, Nicola, Swindon Wiltshire SN4 0ND (GB)
(74) Representative: Sarup, David Alexander

(56) References cited:
- EP-A1- 1 635 511
- WO-A2-2008/051466
- "3rd Generation Partnership Project; Technical Specification Group Radio Access Network; High Speed Downlink Packet Access (HSDPA); Overall description; Stage 2 (Release 10)", 3GPP STANDARD; 3GPP TS 25.308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 10 October 2010 (2010-10-10), pages 1-67, XP050461960, [retrieved on 2010-10-10]
- ERICSSON ET AL: "Evaluation of SIB5 length and impact for Enhanced Uplink in CELL_FACH", 3GPP DRAFT; R2-105828_SIB5_DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Xi'an; 20101011, 4 October 2010 (2010-10-04), XP050452537, [retrieved on 2010-10-04]

## Description

### FIELD OF THE INVENTION

The present invention relates to a method of encoding a control message to be transmitted by user equipment to a network node in a wireless telecommunications network on a random access channel, user equipment operable to perform that method and a computer program product.

### BACKGROUND

Wireless telecommunications systems are known. In those known systems radio coverage is provided to user equipment, for example mobile telephones, by geographical area. A base station is located in each geographical area to provide the required radio coverage. User equipment in the area served by a base station receives information and data from a base station and transmits information and data to the base station. In a high-speed packet access (HSPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

User equipment in idle mode may communicate with a network by using a random access channel (RACH). A RACH is an open channel within the network designed to carry short, infrequent messages which arrive randomly. That is to say, the channel is used in an unscheduled manner. Messages sent by user equipment on the RACH enable the user equipment to move from idle mode to a cell-DCH state in which a dedicated channel is established for communication between user equipment and the wireless telecommunications network.

The RACH is typically used for messages including a user equipment RRC connection request message. A user equipment RRC connection request message is one which requests an RRC connection with the network. This usually leads to a dedicated connection being made between the user equipment and network for communication and the user equipment will move from an idle mode to an RRC connected mode. Such a message may be triggered, for example, when the user equipment wishes to establish a voice or data call. An RRC request message contains essential information for the network to identify the user equipment and provide correct configuration and service for the user equipment.

Features introduced in different releases throughout the development of 3GPP have introduced additional information to be included in an RRC connection request message. However, the size of a RACH carrying such RRC connection request messages has not increased. It has been demonstrated that existing RACH message formats may be unable to carry all information it is desired to encode within an RRC connection request or other similar message.

WO 2008/051466 describes a method and apparatus for sending an indication of channel quality (CQI) on a shared channel whilst user equipment is in a cell_FACH state. User equipment is operable to perform a measurement of at least one parameter, generate a CQI based on that measurement, and transmit that CQI via a random access channel (RACH).

It is desired to enable user equipment to send all current and future information required by 3GPP releases to be encoded within a message, for example an RRC connection request or similar, using existing RACH message formats and channel allowances.

### SUMMARY

Accordingly, a first aspect provides a method of encoding a control message to be transmitted by user equipment to a network node in a wireless telecommunication network on a random access channel, the control message comprising user equipment configuration information, the method comprising the steps of:
collating the configuration information to be encoded into the control message:
   determining whether the collated configuration information can be encoded into a control message block of a predetermined size;
   and if the collated configuration information exceeds the predetermined size, partitioning the configuration information and encoding the partitioned configuration information into a plurality of control message blocks of the predetermined size; and transmitting the plurality of control blocks to the network node, together with decoding information which indicates how to decode the control message blocks to form the control message, wherein at least one of said control message blocks is transmitted from the user equipment to the network node on a random access channel of a first radio carrier, and at least one of the control message blocks is transmitted from the user equipment to the network node on a random access channel of a second radio carrier.

The first aspect recognises that a control message may be sent using several random access channel message blocks if it cannot fit into a single RACH message block. A message extension indication in each block can be used to tell the network that there is additional information required to form a complete control message and that additional information is contained in a further RACH control message block which is to follow or to be sent on other uplink common channels.

Thus, the first aspect recognises that a control message can span more than one control message block. That is to say, a control message may be split into several blocks to be assembled by the network. User equipment is operable to inform the network of the number of RACH message blocks to be reassembled to form a complete control message. That indication may be achieved in several ways.

Re-use of existing and available RACH control message blocks and, in particular, RACH message block formats, reduces the complexity associated with implementation of the proposed enhanced encoding system.

A Random Access channel (RACH) is designed to carry short, infrequent messages from user equipment which arrive randomly from user equipment, directed to the network. As a result, traditional use of a RACH channels and RACH messages has demanded that the information, and message, is delivered from user equipment to the network in a single block. RACH messaging is typically used when user equipment in the network is in a non-CELL-DCH state in which low throughput and short RRC messages are expected.

Splitting messages into several packets is a technique typically used when a dedicated channel is available. Such channels are typically fully managed by the network and exhibit fully predictable, scheduled behaviour, allowing for long continuous bursts of messages, and the splitting of a long message into several fragments.

Common control channels are used for signalling outside an existing direct connection between a base station and user equipment. Common control messages are transmitted on appropriate transport channels including the RACH in the uplink. The control message according to the first aspect is typically a common control message, for example an RRC connection request, a Cell Update message or URA update message.

The user equipment configuration information includes various user equipment control information, and may be referred to as establishment and maintenance information. The configuration control information informs the network of various parameters which may be of importance when implementing a procedure, for example, establishing an RRC connection, cell updating, or URA updating. That information may include various parameters known only, or primarily, by the user equipment, and include, for example, user equipment identifiers, the procedure the user equipment wishes to initiate, nature of procedure to be initiated, the user equipment capabilities and how it may be able to operate, and measurement reports in relation to what is being received or "seen" of the network at the user equipment, including, for example, a measurement of CPICH from surrounding serving and non-serving base stations.

According to the first aspect, at least one of the control message blocks is transmitted from the user equipment to the network node on a random access channel of a first radio carrier, and at least one of the control message blocks is transmitted from the user equipment to the network node on a random access channel of a second radio carrier. Accordingly, if dual, or multi carrier functionally is available at a user equipment, that functionality may be used to allow an extended control message can be successfully transmitted to the network.

In one embodiment, the decoding information comprises an indication of how many control message blocks form the control message. In one embodiment, the decoding information comprises an indicator in each control message block of whether it is a final control message block.

Accordingly, when a control message is split into several blocks to be assembled by the network. User equipment is operable to inform the network of the number of control message blocks to be reassembled to form a complete control message. That indication may be achieved in several ways, including: indicating the total number of message blocks required to contain a full control message. Such an indication may be achieved by reserving one or more bits in a block to indicate the number of blocks forming a complete control message. Such an arrangement may limit the number of message blocks which can be sent, since the indication is limited to a particular number of bits which, in turn, limits the total number of available message blocks.

Alternatively, each message block may include a message extension indication. Such a message extension indication, which may be indicated by a single bit, can be included in each subsequent message block until an end of message, or termination, indication is sent in a final message block. Such a "daisychain" of control blocks allows substantially unlimited extension of control message size.

In one embodiment, the commencement of transmission of each of the control message blocks is spaced by a predetermined period of time. In one embodiment, the control message blocks are transmitted substantially consecutively. Accordingly, a network node may expect a series of blocks over a time period, and can decode a full control message after the final control block is received.

In one embodiment, the control message blocks are transmitted substantially simultaneously. Accordingly, the time delay associated with receipt of all necessary message blocks is minimised.

In one embodiment, at least one of the control message blocks is transmitted from said user equipment to said network node on said random access channel, and at least one of the control message blocks is transmitted from the user equipment to the network node on an available uplink common channel. Accordingly, channels other than the RACH may be utilised if available. Such available channels, may, for example, include a common E-DCH channel.

In one embodiment, the partitioning step further comprises the steps of:
classifying the configuration information into:
   essential information necessary to implement a procedure linked to the control message; and non-essential information associated with the procedure;
   and partitioning the configuration information accordingly.

Accordingly, the essential information may contain basic or fundamental information required by the communication network to process the procedure associated with the control message. The non-essential part of the configuration information may be additional information, for example non-critical extensions, related to the procedure associated with the control message.

In such a way, the essential configuration information may be encoded into separate message blocks to those containing non-essential configuration information. Message blocks containing essential information can be sent by user equipment to the network first using, if appropriate, other techniques of the first aspect, whilst the non-essential part of the control message can be delayed and sent in RACH message blocks at a later time, for example the next available transmission time interval or the next expected transmission time interval. Splitting the essential from the non-essential information in a control message may allows the network to proceed with a procedure associated with a control message more promptly, thereby avoiding delay, and may also assist user equipment by reducing the amount of power required at any given point to transmit the RACH message blocks.

In one embodiment, the essential information is encoded into control message blocks which are transmitted by the user equipment before control message blocks containing non-essential information.

A second aspect provides a computer program product, operable when executed on a computer to perform the method steps of the first aspect.

A third aspect provides user equipment operable to encode a control message to be transmitted by the user equipment to a network node in a wireless telecommunication network on a random access channel, the control message comprising user equipment configuration information,
the user equipment comprising:
collation logic operable to collate the configuration information to be encoded into the control message;
determination logic operable to determine whether the collated configuration information can be encoded into a control message block of a predetermined size;
partitioning and encoding logic operable to partition the configuration information and encode the partitioned configuration information into a plurality of control message blocks of the predetermined size if the collated configuration information exceeds the predetermined size; and
transmission logic operable to transmit the plurality of control blocks to the network node, together with decoding information which indicates how to decode the control message blocks to form the control message, the transmission logic is operable to transmit at least one of the control message on a random access channel of a first radio carrier, and at least one of the control message blocks on a random access channel of a second radio carrier.

In one embodiment, the decoding information comprises an indication of how many control message blocks form the control message.

In one embodiment, the decoding information comprises an indicator in each control message block of whether it is a final control message block.

In one embodiment, the transmission logic is operable to commence transmission of each of the control message blocks such that they are spaced by a predetermined period of time.

In one embodiment, the transmission logic is operable to transmit one or more control message blocks substantially consecutively.

In one embodiment, the transmission logic is operable to transmit one or more of the control message blocks substantially simultaneously.

In one embodiment, the transmission logic is operable to transmit at least one of the control message blocks is on the random access channel, and at least one of said control message blocks on an available uplink common channel.

In one embodiment, the partitioning logic is further operable to:
classify the configuration information into:
   essential information necessary to implement a procedure linked to the control message: and non-essential information associated with the procedure:
   and partition the configuration information accordingly.

In one embodiment, the encoding logic is operable to encode essential information into control message blocks which are transmitted by the user equipment before control message blocks containing non-essential information.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of aspects will now be described further, with reference to the accompanying drawings in which:
Figure 1 illustrates a wireless telecommunications system according to one embodiment;
Figure 2 illustrates schematically a method of transmitting an RRC connection request using a set of RRC message blocks according to one embodiment;
Figure 3 illustrates schematically a method of transmitting an RRC connection request using a plurality of message blocks according to an embodiment;
Figure 4 illustrates schematically a method of sending an RRC connection request message in a multi carrier system according to one embodiment;
Figure 5 illustrates schematically a method of transmitting an RRC connection request as a series of message blocks in accordance with a further embodiment;
Figure 6 illustrates schematically a signalling diagram according to one embodiment for splitting an RRC connection request message into message blocks;
Figure 7 illustrates schematically a method of encoding employed by user equipment according to one aspect; and
Figure 8 illustrates schematically components of user equipment according to one embodiment.

### DETAILED DESCRIPTION OF THE DRAWINGS

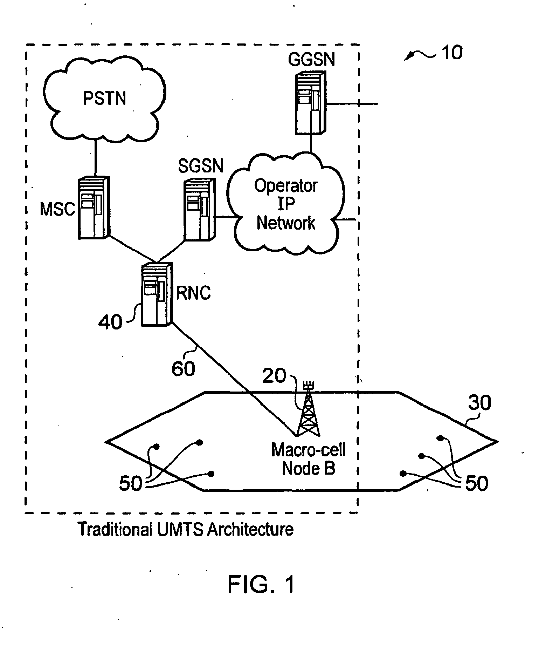

Figure 1 illustrates a wireless telecommunications system 10 according to one embodiment. User equipment 50 roams through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically, a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless telecommunications system is managed by a radio network controller (RNC) 40. The RNC 40 controls operation of the wireless telecommunications system by communicating with a plurality of base stations over a backhaul communications link 60. The RNC also communicates with user equipment 50 via each base station.

User equipment can be in idle mode or in a radio resource control (RRC) connected mode. Cell_DCH state is one of the states within RRC connected mode where user equipment can transmit and receive high data throughput.

When not supporting a call, user equipment exists within the network in idle mode. If user equipment wishes to initiate a call, it contacts a base station by sending a message on a RACH. In order to establish a connection, user equipment transmits a signal to the network at a predetermined power level. If no acknowledgement is received, user equipment increases the power level of transmission of the signal and retransmits the signal. That "preamble" process is repeated until an acknowledgement is received from a base station listening to the signal from user equipment. Once such an acknowledgement is received, and the user equipment becomes aware that a base station is able to receive its messages, user equipment wishing to establish communication for an active call transmits an RRC connection request message on the RACH which is received by a base station and passed up the layers to the RNC 40.

Common control channels are used for signalling outside an existing direct connection between a base station and user equipment. Common control messages are transmitted on appropriate transport channels including the RACH in the uplink.

Common control messages include the RRC connection request message. An RRC connection request message includes various user equipment configuration information. That configuration information provides the network with various information about the user equipment and the state of the user equipment within the network. The type of information fits into a number of categories, including, for example, "header information" which may be considered to be the headline news about why the user equipment wishes to make a call; what type of call it wishes to make, be it a data call or a voice call; and provision of a unique identifier associated with the user equipment requesting a dedicated channel.

The configuration information sent in an RRC connection request also includes: information regarding the user equipment capabilities, for example whether it is capable of using high speed uplink or downlink packet access networks, whether it is MIMO compatible, and how it might be able to operate. Each time a new functionality is added via a 3GPP release the type of signalling included in the capabilities of the user equipment increases.

Also provided in an RRC connection message may be configuration information relating to various measurement results. In particular, a network may generally broadcast on a broadcast channel what is known as system information, stating that anyone who wishes to connect to the network in that area must provide measurement results regarding the strength of the signals that user equipment can see from all base stations in the area. User equipment, when sending an RRC connection message, may be required by a system information instruction to provide measurements of the pilot (CPICH) channel being seen from various base stations in the area at the user equipment.

All of the configuration information referred to above, to be sent in an RRC connection request message, is intended to be encoded into 166 bits. That is to say, the network expects the RACH transport channel to include an RRC connection request message which is 166 bits long.

In 3GPP release 10, a machine-type communication (MTC) device is introduced. In that release, user equipment capability is introduced to a machine (for example, a gas meter or a vehicle) rather than an individual end user. It is expected that the number of MTC devices will exceed conventional human users in due course. It is possible that a large number of MTC devices connecting to a network will cause overloading of the core network. It has been proposed to include an additional identifier in the RRC connection request message to ensure a network can delay connections by allocating MTC devices a low priority. This is further information to be encoded within the 166 bit message already allocated to an RRC connection request message.

Embodiments and aspects described herein address methods by which a user equipment may send current and future information desired within an RRC connection request to a wireless telecommunications network 10 without provision of an additional channel.

Currently, if an RRC connection request message is too long then part of the message is discarded if it cannot fit into a single RACH. In particular, the measurement report characteristics or the entire report may not be sent.

Furthermore, it is proposed to use uplink enhanced cell FACH in which an E-DCH (which has higher capacity than a RACH) is used to send an RRC connection request message. However, such a solution requires an expensive upgrade of the network and/or user equipment to support uplink enhanced cell FACH.

Another possible option is to reduce information included in the RRC connection request message by removing non-critical extension bits. Such a size optimization may only be able to save a limited number, for example 14, bits which may still be insufficient if further measurement reports and machine type communication related information is added to the RRC connection request message.

Aspects and embodiments described herein describe methods of spreading the RRC connection request message over several RACH if it cannot fit into a single RACH message. A message extension indication in the RRC connection request message can be used to tell the network that there is additional information in the RRC connection request message and that additional information is contained in a further RACH message to follow or to be sent on other uplink common channels.

Thus, aspects recognise that an RRC connection request message can span more than one RACH messages. That is to say, the RRC connection request message may be split into several blocks to be assembled by the network. User equipment is operable to inform the network of the number of RACH message blocks to be reassembled to form an RRC connection request message. That indication may be achieved in several ways, including: indicating the total number of RACH message blocks required to contain an RRC connection request message. Such an arrangement limits the number of RACH message blocks which can be sent, since the indication is limited to a particular number of bits which, in turn, limits the total number of available RACH message blocks. Alternatively, each RACH message block may include a message extension indication. Such a message extension indication, which may be indicated by a single bit, can be included in each subsequent RACH message block until an end of message indication is sent in a final RACH message block.

Re-use of existing RACH and, in particular, RACH message block formats reduces the complexity of the system.

Re-use of existing RACH message formats reduces the complexity of the solution to the problem. It will be appreciated that it is always possible to design a new RACH having a higher capacity for messages. Such a solution requires a new decoding chain for such a new RACH and associated messages. It is possible that future RRC connection request messages would also outgrow the capacity of such a new larger RACH message format. In contrast, using multiple existing RACH message blocks allows an RRC connection request message to continue to expand in the future.

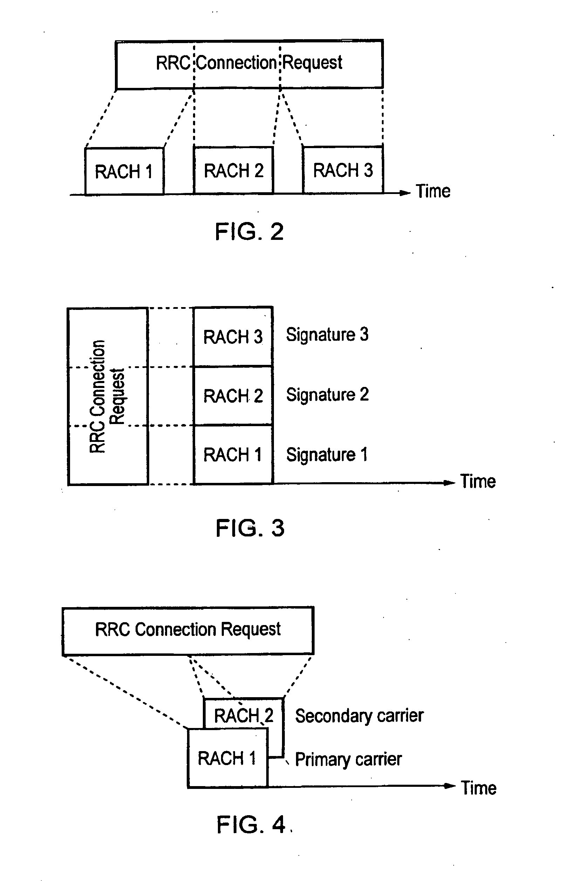

Figure 2 illustrates schematically a method of transmitting an RRC connection request using a set of RRC message blocks according to one embodiment. As illustrated by Figure 2, RACH message blocks carrying an RRC connection request message may be sent at different times. In the illustrated embodiment, an RRC connection request can be split into three RACH message blocks and transmitted consecutively. Spreading the message over time may cause a small delay to a connection request process.

Figure 3 illustrates schematically a method of transmitting an RRC connection request using a plurality of message blocks according to an embodiment. In an alternative embodiment, RACH message blocks can be sent at substantially the same time; that is to say, simultaneously, but differentiated using different OVSF codes and/or different signatures (having the same OVSF codes).

As shown in Figure 3, the RRC connection request message is carried by three RACH message blocks, each having a different signature. Since the message blocks are sent by the user equipment at the same time, there is no resulting delay to the RRC connection request message received by the network 10. Typically, a signature may be used to differentiate messages sent on the RACH by several different user equipment. Each message block sent by user equipment requires a specified amount of power in order to reach the network. If sending three RACH message blocks at the same time as shown in Figure 3, a user equipment will require three times the amount of power as it would were it to be sending only one RACH message block. It will be appreciated that user equipment operating at a cell edge may have insufficient power to simultaneously transmit three RACH message blocks.

Figure 4 illustrates schematically a method of sending an RRC connection request message in a multi carrier system according to one embodiment. A dual cell high speed uplink packet access operable user equipment (DC-HSUPA capable user equipment) is able to simultaneously transmit on two carriers. In such an arrangement user equipment may be operable to transmit a first RACH message block on a primary carrier and a second RACH message block on a secondary carrier. The network 10 can combine information received on the RACH of each frequency carrier to form a complete RRC connection request message from that user equipment. Such a scenario does not introduce delay to receipt of a complete RRC connection request message. However, a DC-HSUPA capable user equipment will also typically be required to split available power across the two available carriers and transmission of two RACH message blocks can simultaneously require additional power from the user equipment.

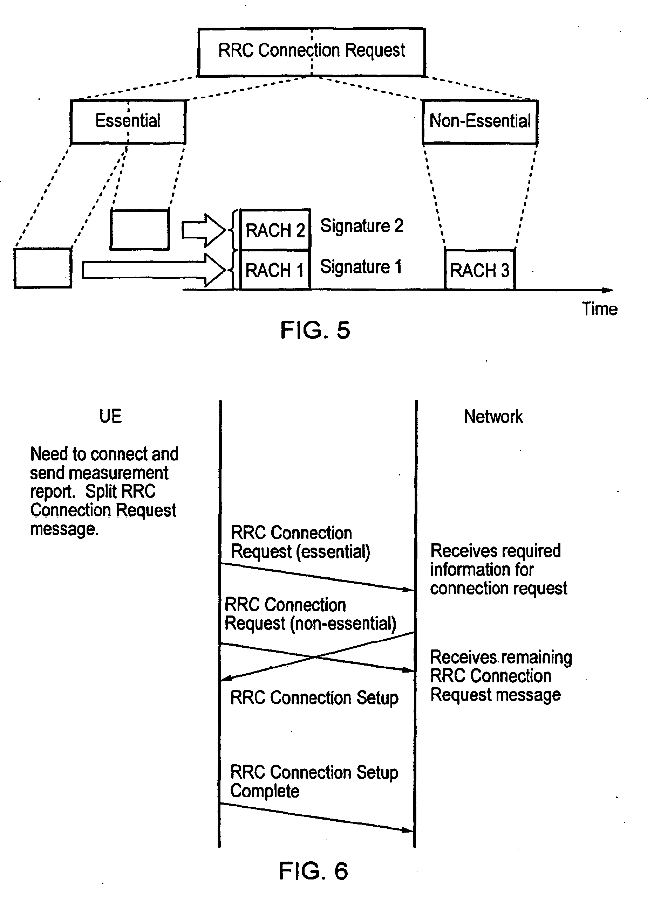

Figure 5 illustrates schematically a method of transmitting an RRC connection request as a series of message blocks in accordance with a further embodiment. In one embodiment an RRC connection request message can be split into essential and non-essential parts. The essential part may contain basic information required by the communication network to process the connection request. The non-essential part of the RRC connection request can contain additional information, for example non-critical extensions. In such a way, the essential part can be sent first using RACH message blocks differentiated in code or frequency if DC-HSUPA capability is available, whilst the non-essential part of the RRC connection request message can be delayed and sent in RACH message blocks at a later time, for example the next available transmission time interval or the next expected transmission time interval. Splitting the essential from the non-essential information in an RRC connection request message allows the network to proceed with an RRC connection request, thereby avoiding delay, and may also assist user equipment by reducing the amount of power required at any given point to transmit the RACH message blocks.

It will be appreciated that any message sent on the RACH may be subject to similar splitting into separate message blocks to be reassembled into a control message by the network. In particular, it will be understood that techniques employed by aspects and embodiments can be applied to a cell update message sent on a RACH by user equipment and a UTRAN Registration Area update message also sent on a RACH.

UTRAN Registration Area updating is a family of procedures which update the UTRAN Registration Area of user equipment when an RRC connection exists and the position of the user equipment is known on URA level in the UTRAN. A URA update message typically contains user equipment ID (U-RNTI), update cause (for example, change of URA or simply periodic updates), user equipment capabilities (for example, support for HS-DSCH in cell_PCH, URA_PCH, HS-DSCHDRX and similar).

Cell update messages typically contain user equipment identifiers, a cell update cause (for example, cell re-selection, periodical update, paging response or radio link failure), various measurement reports, failure causes (for example, incompatible simultaneous reconfiguration, protocol error, unsupported measurements and similar) and user equipment capabilities.

In summary, various embodiments allow combinations of the following to be implemented to allow a large RRC connection request message to be broken into a number of message blocks and assembled by the network: an RRC connection request message may be carried over multiple RACH message blocks and sent on the RACH or other uplink common channels; a message extension indication may be used in a RACH, each RACH message block to indicate that further parts of an RRC connection request message are carried in further RACH message blocks; a first RACH message block may indicate a total number of RACH message blocks used to carry an RRC connection request; each RACH message block carrying part of an RRC connection request message may include a message extension and the final RACH message block may include an end message indicator; the RACH message blocks can be spread over time, can be spread over codes and/or signatures, and may be spread over different frequency carriers in the case of multi carrier or dual carrier-HSUPA capable systems; the RRC connection request message can be split into essential and non-essential parts and encoded in RACH message blocks accordingly. The essential parts may be sent first in time in RACH message blocks, to allow the network to process the connection request as soon as possible, with further non-critical information following in the non-essential RACH message blocks.

It will be appreciated that these techniques, though described in relation to an RRC connection request, may be used for the cell update message or UTRAN Registration Area updating messages also sent on the RACH.

Figure 6 illustrates schematically a signalling diagram according to one embodiment for splitting an RRC connection request message into message blocks. In the example shown in Figure 6, user equipment is required to provide measurements regarding the state of its serving cell and neighbour cells when setting up a connection request. Those measurements may be used by the network to determine whether to redirect the user equipment.

Since measurement reports are typically large, the user equipment in the illustrated embodiment splits the RRC connection request message into an essential and non-essential part to meet the size restriction of the existing signalling within the RACH.

In this example, the essential part of the RRC connection request message contains the user equipment ID, establishment cause and measurements of the serving cell and nearest neighbour. The non-essential part of the RRC connection request message contains the remainder of the RRC connection request message, as required by the network.

User equipment sends the essential part over two RACH message blocks using different signatures simultaneously. The user equipment sends the non-essential part of the RRC connection request message using a further RACH message block at a subsequent transmission time interval. Such an arrangement can be seen schematically in more detail in Figure 5.

Once the essential part of the RRC connection request message is sent, the communication network can proceed with the connection request and respond to user equipment. The user equipment first sends the essential part of the RRC connection request message, followed by the non-essential part of the message at the next available transmission time interval. After receiving the essential information the network is operable to send an RRC connection set up message to the user equipment without waiting for the remainder of the RRC connection request message. Splitting the RRC connection request message into essential and non-essential parts ensures that the RRC connection process is not delayed.

User equipment receives the RRC connection set up message from a base station and completes the connection process by sending an RRC connection set up complete message to the network, as shown in Figure 6.

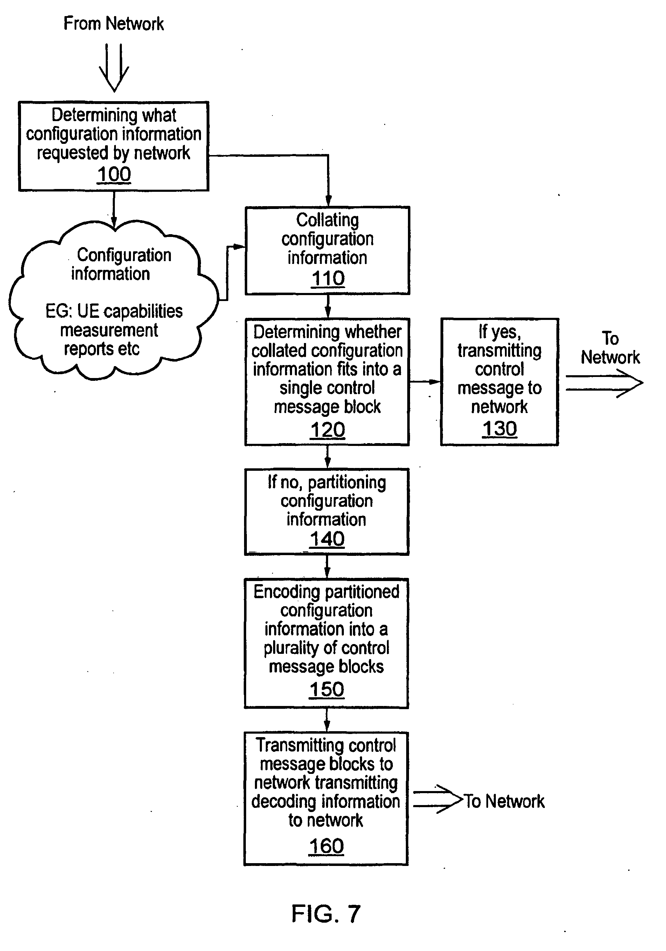

Figure 7 illustrates schematically a method of encoding employed by user equipment according to one aspect. User equipment 50 as illustrated in Figure 1 is operable to determine what configuration information is requested by the network by decoding system information being broadcast by a base station 20. That information is broadcast all the time and tells user equipment 50 that any user equipment wishing to set up and request a call is requested to send a particular set of configuration information.

The step of determining what configuration information is requested by the network is illustrated in schematically as step 100 in Figure 7. When user equipment 50 determines that it wishes to make a call or send a message to the network, it is operable to collate configuration information as illustrated in step 110 of Figure 7, and determines whether that collated configuration information fits into a single control message block. That step of determining whether the collated configuration information fits into a single control block is illustrated schematically as step 120 in Figure 7.

In the case of an RRC connection request, it will be understood that the user equipment 50 is operable to determine whether the collated RRC connection request information will fit into the typical 166 bit message. If it does, then the user equipment is operable to simply transmit the control message to the network, as illustrated in step 130. If all of the requested configuration information does not fit into a single control message block, user equipment 50 is operable to partition the configuration information, as shown in step 140. The user equipment then encodes the partitioned configuration information into a plurality of control message blocks, each the same size (in the case of an RRC connection request message) of 166 bits. That encoding step is shown as step 150 in Figure 7.

Once partitioned, user equipment 50 is operable to transmit the control message blocks to the network, together with decoding information enabling the network to piece together the partitioned information to form a single control message. That step of transmission is shown as step 160.

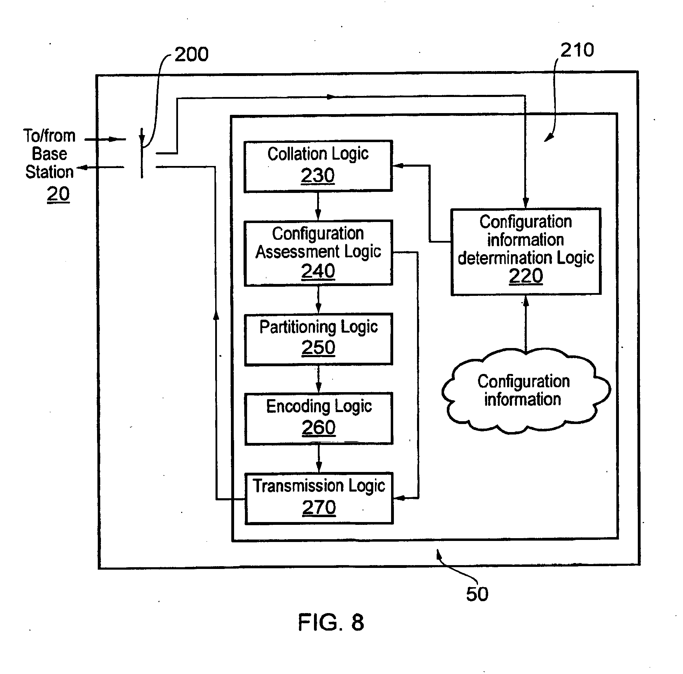

Figure 8 illustrates schematically components of user equipment according to one embodiment. User equipment 50 is operable to perform the method shown in Figure 7. Reception and transmission antenna 200 is provided which enables user equipment 50 to receive messages from and transmit messages to base station 20 forming part of the larger wireless telecommunications network 10. User equipment 50 receives via a system information broadcast by the network and received by antenna 200 an indication of configuration information required by the network to be included in a control message to be transmitted on a RACH. That information is passed to user equipment control unit 210 and, in particular, to configuration information determination logic 220. Configuration information 220 is determined by configuration information determination logic 220 and passed to collation logic 230. Once collated, configuration assessment logic 240 is operable to determine whether the collated information fits into a single control message block. If it does, then configuration assessment logic communicates directly with transmission logic 250 to instruct transmission of an appropriate control message to the network via antenna 200.

If the collated configuration information is determined to not fit into a single control message block, partition logic 250 operates to partition the configuration into a plurality of control message blocks. Those control message blocks are encoded by encoding logic 260 which communicates with transmission logic 270 to ensure the control message blocks, together with suitable decoding information allowing those control message blocks to be assembled into a single control message, are transmitted by antenna 200 to base station 20.

A person of skill in the art would readily recognize that steps of various above-described methods can be performed by programmed computers. Herein, some embodiments are also intended to cover program storage devices, e.g. digital data storage media, which are machine or computer readable and encode machine-executable or computer-executable programs of instructions, wherein said instructions perform some or all of the steps of said above-described methods. The program storage devices may be, e.g. digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of encoding a control message to be transmitted by user equipment (50) to a network node (20, 40) in a wireless telecommunication network (10) on a random access channel, said control message comprising user equipment configuration information,
said method comprising the steps of:
collating (110) said configuration information to be encoded into said control message;
determining (120) whether said collated configuration information can be encoded into a control message block of a predetermined size; **characterised by**
if said collated configuration information exceeds said predetermined size partitioning (140) said configuration information and encoding (150) said partitioned configuration information into a plurality of control message blocks of said predetermined size; and
transmitting (160) said plurality of control message blocks to said network node, together with decoding information which indicates how to decode said control message blocks to form said control message, wherein at least one of said control message blocks is transmitted from said user equipment to said network node on a random access channel of a first radio carrier, and at least one of said control message blocks is transmitted from said user equipment to said network node on a random access channel of a second radio carrier.

2. A method of encoding a control message according to claim 1, wherein said decoding information comprises an indication of how many control message blocks form said control message.

3. A method of encoding a control message according to claim 1, wherein said decoding information comprises an indicator in each control message block of whether it is a final control message block.

4. A method of encoding a control message according to any preceding claim, wherein commencement of transmission of each of said control message blocks is spaced by a predetermined period of time.

5. A method of encoding a control message according to claim 4, wherein said control message blocks are transmitted substantially consecutively.

6. A method of encoding a control message according to claim 4, wherein said control message blocks are transmitted substantially simultaneously.

7. A method of encoding a control message according to any preceding claim, wherein at least one of said control message blocks is transmitted from said user equipment (50) to said network node (20, 40) on said random access channel, and at least one of said control message blocks is transmitted from said user equipment (50) to said network node (20, 40) on an available uplink common channel.

8. A method of encoding a control message according to any preceding claim, wherein said partitioning step further comprises the steps of:
classifying said configuration information into:
essential information necessary to implement a procedure linked to said control message; and non-essential information associated with said procedure;
and partitioning said configuration information accordingly.

9. A method of encoding a control message according to claim 8, wherein said essential information is encoded into control message blocks which are transmitted by said user equipment before control message blocks containing non-essential information.

10. A computer program product, operable when executed on a computer to perform the method steps of any one of claims 1 to 9.

11. User equipment (50) operable to encode a control message to be transmitted by said user equipment (50) to a network node (20, 40) in a wireless telecommunication network (10) on a random access channel, said control message comprising user equipment configuration information,
said user equipment comprising:
collation means adapted (230) to collate said configuration information to be encoded into said control message;
determination means adapted (220) to determine whether said collated configuration information can be encoded into a control message block of a predetermined size; **characterised by**
partitioning (250) and encoding (260) means adapted to partition said configuration information and encode said partitioned configuration information into a plurality of control message blocks of said predetermined size if said collated configuration information exceeds said predetermined size; and
transmission means adapted (270) to transmit said plurality of control blocks to said network node, together with decoding information which indicates how to decode said control message blocks to form said control message, and the transmission means is operable to transmit at least one of the control message on a random access channel of a first radio carrier, and at least one of the control message blocks on a random access channel of a second radio carrier.

## Patentansprüche

1. Verfahren zur Codierung einer von einem Teilnehmergerät (50) an einen Netzwerkknoten (20, 40) in einem drahtlosen Telekommunikationsnetzwerk (10) auf einem Direktzugriffskanal zu übertragenden Steuernachricht, wobei die besagte Steuernachricht Teilnehmergerät-Konfigurationsinformationen umfasst,
wobei das besagte Verfahren die folgenden Schritte umfasst:
Vergleichen (110) der besagten in die besagte Steuernachricht zu codierenden Konfigurationsinformationen miteinander;
Ermitteln (120), ob die miteinander verglichenen Konfigurationsinformationen in einen Steuernachrichtenblock einer vorbestimmten Größe codiert werden können, **dadurch gekennzeichnet, dass**
wenn die besagten miteinander verglichenen Konfigurationsinformationen die besagte vorbestimmte Größe überschreiten, Partitionieren (140) der besagten Konfigurationsinformationen, und Codieren (150) der besagten partitionierten Konfigurationsinformationen in eine Vielzahl von Steuernachrichtenblöcke mit der vorbestimmten Größe; und
Übertragen (160) der besagten Vielzahl von Steuernachrichtenblöcken an den besagten Netzwerkknoten, zusammen mit Decodierungsinformationen, welche angeben, wie die besagten Steuernachrichtenblöcke zu decodieren sind, um die besagte Steuernachricht zu bilden, wobei zumindest einer der besagten Steuernachrichtenblöcke auf einem Direktzugriffskanal eines ersten Funkträgers von dem besagten Teilnehmergerät an den besagten Netzwerkknoten übertragen wird, und wobei zumindest einer der besagten Steuernachrichtenblöcke auf einem Direktzugriffskanal eines zweiten Funkträgers von dem besagten Teilnehmergerät an den besagten Netzwerkknoten übertragen wird.

2. Verfahren zur Codierung einer Steuernachricht nach Anspruch 1, wobei die besagten Decodierungsinformationen eine Angabe darüber, wie viele Steuernachrichtenblöcke die besagte Steuernachricht bilden, umfassen.

3. Verfahren zur Codierung einer Steuernachricht nach Anspruch 1, wobei die besagten Decodierungsinformationen in jedem Steuernachrichtenblock einen Indikator dafür, ob es sich um einen abschließenden Steuernachrichtenblock handelt, umfassen.

4. Verfahren zur Codierung einer Steuernachricht nach einem beliebigen der vorstehenden Ansprüche, wobei der Beginn der Übertragung eines jeden der besagten Steuernachrichtenblöcke in vorbestimmten zeitlichen Abständen erfolgt.

5. Verfahren zur Codierung einer Steuernachricht nach Anspruch 4, wobei die besagten Steuernachrichtenblöcke im Wesentlichen nacheinander übertragen werden.

6. Verfahren zur Codierung einer Steuernachricht nach Anspruch 4, wobei die besagten Steuernachrichtenblöcke im Wesentlichen gleichzeitig übertragen werden.

7. Verfahren zur Codierung einer Steuernachricht nach einem beliebigen der vorstehenden Ansprüche, wobei zumindest einer der besagten Steuernachrichtenblöcke auf dem besagten Direktzugriffskanal von dem besagten Teilnehmergerät (50) an den besagten Netzwerkknoten (20, 40) übertragen wird, und wobei zumindest einer der besagten Steuernachrichtenblöcke auf einem verfügbaren gemeinsamen Uplink-Kanal von dem besagten Teilnehmergerät (50) an den besagten Netzwerkknoten (20, 40) übertragen wird.

8. Verfahren zur Codierung einer Steuernachricht nach einem beliebigen der vorstehenden Ansprüche, wobei der besagte Schritt des Partitionierens weiterhin die folgenden Schritte umfasst:
Klassifizieren der besagten Konfigurationsinformationen in:
Wesentliche Informationen, die erforderlich sind, um eine mit der besagten Steuernachricht verbundene Prozedur zu implementieren; und unwesentliche Informationen, welche mit der besagten Prozedur assoziiert sind;
und Partitionieren der besagten Konfigurationsinformationen dementsprechend.

9. Verfahren zur Codierung einer Steuernachricht nach Anspruch 8, wobei die besagten wesentlichen Informationen in Steuernachrichtenblöcke codiert werden, welche von dem besagten Teilnehmergerät vor Steuernachrichtenblöcken, die unwesentliche Informationen enthalten, übertragen werden.

10. Computerprogramm-Produkt, welches bei dessen Ausführung auf einem Computer betreibbar ist, um die Verfahrensschritte eines beliebigen der Ansprüche 1 bis 9 durchzuführen.

11. Teilnehmergerät (50), betreibbar, um eine von dem besagten Teilnehmergerät (50) in einem drahtlosen Telekommunikationsnetzwerk (10) auf einem Direktzugriffskanal an einen Netzwerkknoten (20, 40) zu übertragenden Steuernachricht zu codieren, wobei die besagte Steuernachricht Teilnehmergerät-Konfigurationsinformationen umfasst,
wobei das besagte Teilnehmergerät umfasst:
Vergleichsmittel (230), welche dazu ausgelegt sind, die in die besagte Steuernachricht zu codierenden Konfigurationsnachrichten miteinander zu vergleichen;
Ermittlungsmittel (220), welche dazu ausgelegt sind, zu ermitteln, ob die besagten miteinander verglichenen Konfigurationsinformationen in einen Steuernachrichtenblock einer vorbestimmten Größe codiert werden können, **gekennzeichnet durch**:
Partitionierungsmittel (250) und Codiermittel (260), welche dazu ausgelegt sind, die besagten Konfigurationsinformationen zu partitionieren und die besagten partitionierten Konfigurationsinformationen in eine Vielzahl von Steuernachrichtenblöcke mit der vorbestimmten Größe zu codieren, wenn die besagten miteinander verglichenen Konfigurationsinformationen die besagte vorbestimmte Größe überschreiten; und
Übertragungsmittel (270), welche dazu ausgelegt sind, die besagte Vielzahl von Steuerblöcken, zusammen mit Decodierungsinformationen, welche angeben, wie die besagten Steuernachrichtenblöcke zu decodieren sind, um die besagte Steuernachricht zu bilden, an den besagten Netzwerkknoten zu übertragen, und wobei die besagten Übertragungsmittel betreibbar sind, um zumindest einen der Steuernachrichtenblöcke auf einem Direktzugriffskanal eines ersten Funkträgers zu übertragen, und zumindest einen der besagten Steuernachrichtenblöcke auf einem Direktzugriffskanal eines zweiten Funkträgers zu übertragen.

## Revendications

1. Procédé de codage d'un message de commande devant être transmis par un équipement utilisateur (50) à un noeud de réseau (20, 40) dans un réseau de télécommunication sans fil (10) sur un canal d'accès aléatoire, ledit message de commande comprenant des informations de configuration d'équipement utilisateur,
ledit procédé comprenant les étapes suivantes :
réunir (110) lesdites informations de configuration à coder dans ledit message de commande ;
déterminer (120) si lesdites informations de configuration réunies peuvent ou non être codées dans un bloc de message de commande d'une taille prédéterminée ;
**caractérisé en ce que**
si lesdites informations de configuration réunies dépassent ladite taille prédéterminée, diviser (140) lesdites informations de configuration et coder (150) lesdites informations de configuration divisées dans une pluralité de blocs de message de commande de ladite taille prédéterminée ; et
transmettre (160) ladite pluralité de blocs de messages de commande audit noeud de réseau, conjointement avec des informations de décodage qui indiquent comment décoder lesdits blocs de message de commande pour former ledit message de commande, dans lequel au moins un desdits blocs de message de commande est transmis entre ledit équipement utilisateur et ledit noeud de réseau sur un canal d'accès aléatoire d'une première porteuse radio, et au moins un desdits blocs de message de commande est transmis entre ledit équipement utilisateur et ledit noeud de réseau sur un canal d'accès aléatoire d'une deuxième porteuse radio.

2. Procédé de codage d'un message de commande selon la revendication 1, dans lequel lesdites informations de décodage comprennent une indication du nombre de blocs de message de commande formant ledit message de commande.

3. Procédé de codage d'un message de commande selon la revendication 1, dans lequel lesdites informations de décodage comprennent un indicateur dans chaque bloc de message de commande indiquant s'il s'agit ou non d'un bloc de message de commande final.

4. Procédé de codage d'un message de commande selon l'une quelconque des revendications précédentes, dans lequel le début de la transmission de chacun desdits blocs de message de commande est espacé par une période prédéterminée.

5. Procédé de codage d'un message de commande selon la revendication 4, dans lequel lesdits blocs de message de commande sont transmis sensiblement consécutivement.

6. Procédé de codage d'un message de commande selon la revendication 4, dans lequel lesdits blocs de message de commande sont transmis sensiblement simultanément.

7. Procédé de codage d'un message de commande selon l'une quelconque des revendications précédentes, dans lequel au moins un desdits blocs de message de commande est transmis entre ledit équipement utilisateur (50) et ledit noeud de réseau (20, 40) sur ledit canal d'accès aléatoire, et au moins un desdits blocs de message de commande est transmis entre ledit équipement utilisateur (50) et ledit noeud de réseau (20,40) sur un canal commun de liaison montante disponible.

8. Procédé de codage d'un message de commande selon l'une quelconque des revendications précédentes, dans lequel ladite étape de division comprend en outre les étapes suivantes :
classer lesdites informations de configuration selon :
des informations essentielles nécessaires pour mettre en oeuvre une procédure liée audit message de commande ; et des informations non-essentielles associées à ladite procédure ;
et diviser lesdites informations de configuration en conséquence.

9. Procédé de codage d'un message de commande selon la revendication 8, dans lequel lesdites informations essentielles sont codées dans des blocs de message de commande qui sont transmis par ledit équipement utilisateur avant les blocs de message de commande contenant des informations non-essentielles.

10. Produit de programme informatique permettant, lorsqu'il est exécuté sur un ordinateur, d'exécuter les étapes du procédé selon l'une quelconque des revendications 1 à 9.

11. Équipement utilisateur (50) permettant de coder un message de commande devant être transmis par ledit équipement utilisateur (50) à un noeud de réseau (20, 40) dans un réseau de télécommunication sans fil (10) sur un canal d'accès aléatoire, ledit message de commande comprenant des informations de configuration d'équipement utilisateur,
ledit équipement utilisateur comprenant :
des moyens de réunion (230) adaptés pour réunir lesdites informations de configuration à coder dans ledit message de commande ;
des moyens de détermination (220) adaptés pour déterminer si lesdites informations de configuration réunies peuvent ou non être codées dans un bloc de message de commande d'une taille prédéterminée ; **caractérisé par**
des moyens de division (250) et de codage (260) adaptés pour diviser lesdites informations de configuration et coder lesdites informations de configuration divisées dans une pluralité de blocs de message de commande de ladite taille prédéterminée si lesdites informations de configuration réunies dépassent ladite taille prédéterminée ; et
des moyens de transmission (270) adaptés pour transmettre ladite pluralité de blocs de commande audit noeud de réseau, avec des informations de décodage qui indiquent comment décoder lesdits blocs de message de commande pour former ledit message de commande, et des moyens de transmission permet de transmettre au moins un des blocs de message de commande sur un canal d'accès aléatoire d'une première porteuse radio, et au moins un des blocs de message de commande sur un canal d'accès aléatoire d'une deuxième porteuse radio.
